# EUROPEAN PATENT APPLICATION

(11) **EP 3 632 552 A1**
(43) Date of publication of application: **08.04.2020**
(21) Application number: 18810768.4
(22) Date of filing: 31.05.2018
(51) Int. Cl.: B01J 29/035, B01J 29/14, B01J 29/46, B01J 29/68, B01J 29/76, B01J 35/10

(54) **AMMONIA SYNTHESIS CATALYST STRUCTURE AND PRODUCTION METHOD THEREFOR, AMMONIA SYNTHESIS DEVICE AND AMMONIA SYNTHESIS METHOD**

(30) Priority: 31.05.2017 JP 2017108631
(71) Applicant: Furukawa Electric Co., Ltd., Chiyoda-ku Tokyo 100-8322 (JP)
(72) Inventor: MASUDA Takao, Hokkaido 0600808 (JP); NAKASAKA Yuta, Hokkaido 0600808 (JP); YOSHIKAWA Takuya, Hokkaido 0600808 (JP); KATO Sadahiro, Tokyo 100-8322 (JP); FUKUSHIMA Masayuki, Tokyo 100-8322 (JP); TAKAHASHI Hiroko, Tokyo 100-8322 (JP); BANBA Yuichiro, Tokyo 100-8322 (JP); SEKINE Kaori, Tokyo 100-8322 (JP)
(74) Representative: Gunzelmann, Rainer
(86) International application number: PCT/JP2018/021087
(87) International publication number: WO 2018/221699

(57) **Abstract**

There are provided a structured catalyst for ammonia synthesis and a method for producing the same, an ammonia synthesis device, and a method for synthesizing ammonia that ensure suppressing a reduction in catalytic activity and achieving a long life time. The structured catalyst for ammonia synthesis 1 includes a support 10 having a porous structure composed of a zeolite-type compound and an ammonia synthesis catalytic substance made of at least one metal present inside the support 10. The ammonia synthesis catalytic substance has a mean particle size from 0.7 nm to 5 nm. The support 10 includes channels 11 connecting with one another. The channel 11 has a mean inner diameter from 0.50 nm to 0.64 nm. The ammonia synthesis catalytic substance is present in at least the channel 11 of the support 10.

## Description

### Technical Field

The present invention relates to a structured catalyst for ammonia synthesis that includes a support having a porous structure and an ammonia synthesis catalytic substance, such as metal nanoparticles, a method for producing the same, an ammonia synthesis device, and a method for synthesizing ammonia.

### Background Art

Ammonia is a compound indispensable for cereal production as a raw material of artificial fertilizer, such as ammonium sulfate and urea fertilizer. As a method for synthesizing ammonia, the Haber-Bosch method has been known. In the Harbor Bash method, a mixed gas of nitrogen and hydrogen is directly reacted under conditions of 400 to 600°C and 20 to 100 MPa. The Haber-Bosch method uses an iron-based catalyst with Fe₃O₄ as a main component. To satisfy the high temperature and high pressure conditions required by the Haber-Bosch method, an ammonia synthesis device becomes complicated because a heat resistance and a pressure resistance are required for the ammonia synthesis device. To avoid the complicated ammonia synthesis device, there has been a demand for a method for synthesizing ammonia that can be performed under low temperature and low pressure conditions.

Therefore, as the method for synthesizing ammonia performed under the low temperature and low pressure conditions, it has been proposed to use one type of metal selected from the group consisting of Mo, W, Re, Fe, Co, Ru, and Os, or a combination of metals selected from the group consisting of Fe and Ru, Ru and Re, and Fe and Mo as an ammonia synthesis catalyst (Patent Document 1).

Furthermore, Patent Document 1 discloses that, in the method for synthesizing ammonia that can be performed under the low temperature and low pressure conditions, a support is used together with the ammonia synthesis catalyst to improve an activity of the ammonia synthesis catalyst. Examples of the support include magnesium oxide, aluminum oxide, graphite, cerium, magnesia, and the like.

### Citation List

### Patent Literature

Patent Document 1: JP 2015-217384 A

### Summary of Invention

### Technical Problem

However, in the structured catalyst described above, because catalyst particles are supported on or near surfaces of the supports, the catalyst particles move within the supports due to effects of force, heat, and the like received from fluid containing a raw material during ammonia synthesis, and aggregation (sintering) of the catalyst particles easily occurs. When the aggregation of the catalyst particles occurs, a catalytic activity decreases due to a reduction in effective surface area of a catalyst, and therefore life time of the structured catalyst becomes shorter than normally. Therefore, the structured catalyst itself must be replaced or regenerated over a short period of time, which leads to problems that the replacement operation is cumbersome and resource saving cannot be achieved.

An object of the present invention is to provide a structured catalyst for ammonia synthesis and a method for producing the same, an ammonia synthesis device, and a method for synthesizing ammonia that ensure suppressing a reduction in catalytic activity and achieving a long life time.

### Solution to Problem

As a result of diligent research to achieve the object described above, the present inventors have found that a structured catalyst for ammonia synthesis that ensures suppressing a reduction in catalytic activity of an ammonia synthesis catalytic substance and achieving a long life time can be obtained as follows and complete the present invention based on the knowledge. The structured catalyst for ammonia synthesis includes a support having a porous structure composed of a zeolite-type compound and the ammonia synthesis catalytic substance made of at least one metal present inside the support. The support includes channels connecting with one another. The ammonia synthesis catalytic substance is present in at least the channel of the support.

In other words, the main configurations of the present invention are as follows.
[1] A structured catalyst for ammonia synthesis including:
   a support having a porous structure composed of a zeolite-type compound; and
   an ammonia synthesis catalytic substance made of at least one metal present inside the support, the ammonia synthesis catalytic substance having a mean particle size from 0.7 nm to 5 nm, the support including channels connecting with one another, the channel having a mean inner diameter from 0.50 nm to 0.64 nm, the ammonia synthesis catalytic substance being present in at least the channel of the support.
[2] The structured catalyst for ammonia synthesis according to [1], wherein the channel has any of a one-dimensional pore, a two-dimensional pore, and a three-dimensional pore; and an enlarged pore portion, the one-dimensional pore, the two-dimensional pore, and the three-dimensional pore being defined by a framework of the zeolite-type compound, the enlarged pore portion having a different diameter from those of the one-dimensional pore, the two-dimensional pore, and the three-dimensional pore, and the ammonia synthesis catalytic substance is present in at least the enlarged pore portion.
[3] The structured catalyst for ammonia synthesis according to [2], wherein the enlarged pore portion causes a plurality of pores constituting any of the one-dimensional pore, the two-dimensional pore, and the three-dimensional pore to connect with one another.
[4] The structured catalyst for ammonia synthesis according to [2] or [3], wherein the ammonia synthesis catalytic substance is metal nanoparticles.
[5] The structured catalyst for ammonia synthesis according to [4], wherein the metal nanoparticles are at least one type of metal selected from the group consisting of Mo, W, Re, Fe, Co, Ru, Os, Cr, Mn, Tc, and Rh.
[6] The structured catalyst for ammonia synthesis according to [4] or [5], wherein the metal nanoparticles contain a metal element (M) in an amount from 0.5 to 2.5 mass% relative to the structured catalyst for ammonia synthesis.
[7] The structured catalyst for ammonia synthesis according to any one of [4] to [6], wherein the metal nanoparticles have a mean particle size less than or equal to an inner diameter of the enlarged pore portion.
[8] The structured catalyst for ammonia synthesis according to any one of [4] to [7], wherein a ratio of the mean particle size of the metal nanoparticles to a mean inner diameter of the channel is from 1.2 to 10.
[9] The structured catalyst for ammonia synthesis according to [8], wherein the ratio of the mean particle size of the metal nanoparticles to the mean inner diameter of the channel is from1.3 to 8.
[10] The structured catalyst for ammonia synthesis according to [9], wherein the ratio of the mean particle size of the metal nanoparticles to the mean inner diameter of the channel is from1.4 to 3.6.
[11] The structured catalyst for ammonia synthesis according to any one of [2] to [10], wherein the enlarged pore portion has an inner diameter from 0.7 nm to 50 nm.
[12] The structured catalyst for ammonia synthesis according to any one of [1] to [11], further including at least one another ammonia synthesis catalytic substance held on an outer surface of the support.
[13] The structured catalyst for ammonia synthesis according to [12], wherein a content of the at least one ammonia synthesis catalytic substance present inside the support is greater than a content of the at least one another ammonia synthesis catalytic substance held on the outer surface of the support.
[14] The structured catalyst for ammonia synthesis according to any one of [1] to [13], wherein the zeolite-type compound is a silicate compound.
[15] An ammonia synthesis device including the structured catalyst for ammonia synthesis described in any one of [1] to [14].
[16] A method for producing a structured catalyst for ammonia synthesis including:
   a calcination step of calcinating a precursor material (B), the precursor material (B) being obtained by impregnating a precursor material (A) for obtaining a support having a porous structure composed of a zeolite-type compound with a metal containing solution;
   a hydrothermal treatment step of performing a hydrothermal treatment on a precursor material (C) obtained by calcinating the precursor material (B); and
   a step of performing a reduction treatment on the hydrothermally treated precursor material (C).
[17] The method for producing a structured catalyst for ammonia synthesis according to [16], wherein, prior to the calcination step, from 50 to 500 mass% of a non-ionic surfactant is added to the precursor material (A).
[18] The method for producing a structured catalyst for ammonia synthesis according to [16] or [17], wherein, prior to the calcination step, the metal containing solution is dividedly added to the precursor material (A) in multiple times to impregnate the precursor material (A) with the metal containing solution.
[19] The method for producing a structured catalyst for ammonia synthesis according to any one of [16] to [18], wherein, when the precursor material (A) is impregnated with the metal containing solution prior to the calcination step, an added amount of the metal containing solution added to the precursor material (A), in terms of a ratio of silicon (Si) constituting the precursor material (A) to a metal element (M) contained in the metal containing solution added to the precursor material (A) (a ratio of number of atoms Si/M), is adjusted to from 10 to 1000.
[20] The method for producing a structured catalyst for ammonia synthesis according to [16], wherein, in the hydrothermal treatment step, the precursor material (C) and a structure directing agent are mixed.
[21] The method for producing a structured catalyst for ammonia synthesis according to [16], wherein the hydrothermal treatment step is performed under a basic condition.
[22] A method for synthesizing ammonia that synthesizes ammonia from nitrogen and hydrogen using a catalyst, the catalyst including a structured catalyst for ammonia synthesis including:
   a support having a porous structure composed of a zeolite-type compound; and
   at least one ammonia synthesis catalytic substance present inside the support,
   the support including channels connecting with one another,
   the ammonia synthesis catalytic substance being present in at least an enlarged pore portion of the channel of the support.
[23] A method for synthesizing ammonia including synthesizing ammonia from nitrogen and water using the structured catalyst for ammonia synthesis described in any one of [1] to [14].
[24] A method for synthesizing ammonia including converting nitrogen and hydrogen into ammonia using the ammonia synthesis device described in [15].

### Advantageous Effects of Invention

According to the present invention, a structured catalyst for ammonia synthesis and a method for producing the same, an ammonia synthesis device, and a method for synthesizing ammonia that ensure suppressing a reduction in catalytic activity and achieving a long life time can be provided.

### Brief Description of Drawings

FIG. 1 is a diagram schematically illustrating a structured catalyst for ammonia synthesis according to an embodiment of the present invention so that an inner structure can be understood. FIG. 1A is a perspective view (partially shown in cross-section), and FIG. 1B is a partially enlarged cross-sectional view.
FIG. 2 is a partially enlarged cross-sectional view for explaining an example of a function of the structured catalyst for ammonia synthesis of FIG. 1. FIG. 2A is a diagram illustrating a sieve function, and FIG. 2B is a diagram explaining catalytic ability.
FIG. 3 is a flowchart depicting an example of a method for producing the structured catalyst for ammonia synthesis of FIG. 1.
FIG. 4 is a schematic view illustrating a modified example of the structured catalyst for ammonia synthesis of FIG. 1.

### Description of Embodiments

Hereinafter, embodiments of the present invention will be described in detail with reference to drawings.

### Structure of Structured Catalyst for Ammonia Synthesis

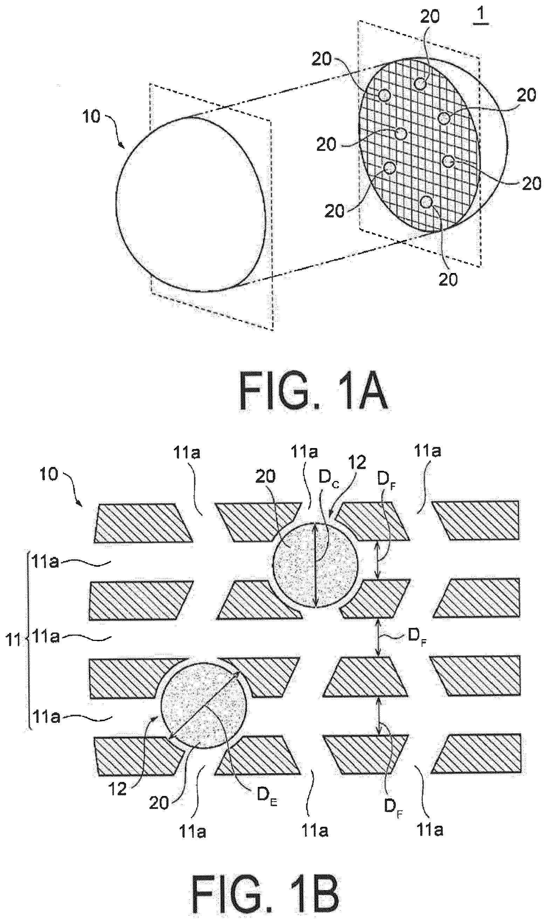

FIG. 1 is a diagram schematically illustrating the structure of the structured catalyst for ammonia synthesis according to an embodiment of the present invention, FIG. 1A is a perspective view (partially shown in cross-section), and FIG. 1B is a partially enlarged cross-sectional view. Note that the structured catalyst for ammonia synthesis in FIG. 1 illustrates an example, and a shape, dimensions, and the like of each structure according to the present invention are not limited to those illustrated in FIG. 1.

As illustrated in FIG. 1A, a structured catalyst for ammonia synthesis 1 includes a support 10 having a porous structure composed of a zeolite-type compound and at least one ammonia synthesis catalytic substance, which is metal nanoparticles 20, present inside the support 10.

In the structured catalyst for ammonia synthesis 1, a plurality of the metal nanoparticles 20, 20, ... are embedded in the porous structure of the support 10. The metal nanoparticles 20, which are the ammonia synthesis catalytic substance, only needs to be a material having an ammonia synthesis catalytic ability (catalytic activity), and details of the metal nanoparticles 20 will be described later.

The support 10 has the porous structure, and as illustrated in FIG. 1B, a plurality of pores 11a, 11a, ... are suitably formed so as to provide channels 11 connecting with one another. Here, the metal nanoparticles 20 are present in at least the channel 11 of the support 10 and preferably held by at least the channel 11 of the support 10.

With such a structure, movement of the metal nanoparticles 20 within the support 10 is restricted, and aggregation of the metal nanoparticles 20, 20 is effectively prevented. As a result, a decrease in effective surface area of the metal nanoparticles 20 can be effectively suppressed, and the catalytic activity of the metal nanoparticles 20, which are the ammonia synthesis catalytic substance, lasts over a long period of time. In other words, the structured catalyst for ammonia synthesis 1 can suppress the decrease in catalytic activity due to the aggregation of the metal nanoparticles 20, thereby ensuring extended life time of the structured catalyst for ammonia synthesis 1. In addition, the extended life time of the structured catalyst for ammonia synthesis 1 allows reducing a replacement frequency of the structured catalyst for ammonia synthesis 1, allows significantly reducing an amount of waste of the used structured catalyst for ammonia synthesis 1, and allows achieving resource saving.

Typically, when the structured catalyst for ammonia synthesis is used in fluid containing a source material of ammonia synthesis, the structured catalyst for ammonia synthesis possibly receives an external force from the fluid. In this case, when the metal nanoparticles 20, which are the ammonia synthesis catalytic substance, are held only in an attached state to an outer surface of the support 10, there is a problem that the metal nanoparticles 20 are likely to separate from the outer surface of the support 10 due to an influence from the external force from the fluid. In contrast, in the structured catalyst for ammonia synthesis 1, the metal nanoparticles 20 are present in at least the channel 11 of the support 10, and therefore, even when subjected to an influence of an external force caused by a fluid, the metal nanoparticles 20 are less likely to separate from the support 10. That is, when the structured catalyst for ammonia synthesis 1 is in a fluid, the fluid flows into the channel 11 through the pore 11a of the support 10. Accordingly, it is considered that a speed of the fluid flowing into the channel 11 is slower than a speed of the fluid flowing on the outer surface of the support 10 due to a flow path resistance (frictional force). Due to the influence of such a flow path resistance, a pressure received by the metal nanoparticles 20 held in the channel 11 from the fluid is lower than a pressure received by the metal nanoparticles from the fluid outside of the support 10. Accordingly, the separation of the metal nanoparticles 20 present inside the support 10 can be effectively suppressed, and the catalytic activity of the metal nanoparticles 20 can be stably maintained over a long period of time. Note that the flow path resistance as described above is considered to be larger as the channel 11 of the support 10 has a plurality of bends and branches, and the interior of the support 10 becomes more complicated, three-dimensional structure.

Preferably, the channel 11 has any of a one-dimensional pore, a two-dimensional pore, and a three-dimensional pore defined by a framework of the zeolite-type compound and an enlarged pore portion 12 having different diameter from those of the one-dimensional pore, the two-dimensional pore, and the three-dimensional pore. In this case, the metal nanoparticles 20 are preferably present in at least the enlarged pore portion 12. More preferably, the metal nanoparticles 20 are embedded in at least the enlarged pore portion 12. Additionally, the enlarged pore portion 12 preferably connects with the plurality of pores 11a, 11a constituting any one of the one-dimensional pore, the two-dimensional pore, and the three-dimensional pore. As a result, separate channels different from the one-dimensional pore, the two-dimensional pore, or the three-dimensional pore are provided inside the support 10, so that a function of metal nanoparticles 20 can be further exhibited. Here, the "one-dimensional pore" refers to a tunnel-type or cage-type pore forming a one-dimensional channel, or a plurality of tunnel-type or cage-type pores (a plurality of one-dimensional channels) forming a plurality of the one-dimensional channels. Also, the "two-dimensional pore" refers to a two-dimensional channel in which the plurality of one-dimensional channels are connected two-dimensionally. The "three-dimensional pore" refers to a three-dimensional channel in which the plurality of one-dimensional channels are connected three-dimensionally. As a result, the movement of the metal nanoparticles 20 in the support 10 is further restricted, and the separation of the metal nanoparticles 20 and the aggregation of the metal nanoparticles 20, 20 can be further effectively prevented. Embedding refers to a state in which the metal nanoparticles 20 are encapsulated in the support 10. At this time, the metal nanoparticles 20 and the support 10 need not necessarily be in direct contact with one another, and the metal nanoparticles 20 may be indirectly held by the support 10 with other substances (for example, a surfactant and the like) interposed between the metal nanoparticles 20 and the support 10.

Although FIG. 1B illustrates the case in which the metal nanoparticles 20 are embedded in the enlarged pore portion 12, the structure is not only limited to this. The metal nanoparticles 20 may be held by the channel 11 with a part of the metal nanoparticles 20 protruding outside the enlarged pore portion 12. Furthermore, the metal nanoparticles 20 may be partially buried in a part of the channel 11 other than the enlarged pore portion 12 (for example, an inner wall part of the channel 11), or may be held by fixing, for example.

Additionally, the channel 11 is preferably formed three-dimensionally by including a branch portion or a merging portion in the support 10, and the enlarged pore portion 12 is preferably provided in the branch portion or the merging portion of the channel 11.

A mean inner diameter D_{F} of the channel 11 formed in the support 10 is calculated from a mean value of a short diameter and a long diameter of the pore 11a constituting any of the one-dimensional pore, the two-dimensional pore, and the three-dimensional pore. The mean inner diameter D_{F} is from 0.50 nm to 0.64 nm, and preferably from 0.55 nm to 0.61. An inner diameter D_{E} of the enlarged pore portion 12 is from 0.7 nm to 50 nm, for example. The inner diameter D_{E} is preferably from 1.1 nm to 40 nm, and more preferably from 1.1 nm to 3.3 nm. For example, the inner diameter D_{E} of the enlarged pore portion 12 depends on a fine pore diameter of a precursor material (A) and a mean particle size D_{C} of the metal nanoparticles 20 to be embedded described later. The inner diameter D_{E} of the enlarged pore portion 12 has a size such that the enlarged pore portion 12 can embed the metal nanoparticles 20.

The support 10 is composed of the zeolite-type compound. Examples of the zeolite-type compounds include a silicate compound, such as zeolite (aluminosilicate),

cation-exchanged zeolite, and silicalite, a zeolite analog compound, such as aluminoborate, aluminoarsenate, and germanate, and a phosphate-based zeolite analog substance, such as molybdenum phosphate. Among these, the zeolite-type compound is preferably a silicate compound.

A framework of the zeolite-type compound is selected from FAU type (Y type or X type), MTW type, MFI type (ZSM-5), FER type (ferrierite), LTA type (A type), MWW type (MCM-22), MOR type (mordenite), LTL type (L type), and BEA type (beta type). Preferably, it is MFI type, and more preferably ZSM-5. A plurality of pores having a pore diameter corresponding to each framework is formed in the zeolite-type compound. For example, the maximum pore diameter of MFI type is 0.636 nm (6.36 Å) and the mean pore diameter is 0.560 nm (5.60 Å).

The metal nanoparticles 20, which are the ammonia synthesis catalytic substance, will be described in detail below.

There are cases that the metal nanoparticles 20 are primary particles or secondary particles formed through aggregation of the primary particles. The metal nanoparticles 20 preferably have the mean particle size Dc larger than the mean inner diameter D_{F} of the channel 11 and less than or equal to the inner diameter D_{E} of the enlarged pore portion 12 (D_{F} < D_{C} ≤ D_{E}). The metal nanoparticles 20 are suitably present in the enlarged pore portion 12 of the channel 11, and the movement of the metal nanoparticles 20 in the support 10 is restricted. Thus, even when the metal nanoparticles 20 receive an external force from the fluid, the movement of the metal nanoparticles 20 in the support 10 is suppressed, and it is possible to effectively prevent mutual contact of the metal nanoparticles 20, 20, ... present in the respective enlarged pore portions 12, 12, ... dispersedly disposed in the channels 11 of the support 10.

In both cases of the primary particles and the secondary particles, the metal nanoparticles 20 have the mean particle size D_{C} from 0.7 to 5 nm, more preferably from 0.8 nm or more and less than 4 nm, and further preferably from 1.2 to 2.6 nm. Furthermore, a ratio of the mean particle size D_{C} of the metal nanoparticles 20 to the mean inner diameter D_{F} of the channel 11 (D_{C}/D_{F}) is preferably from 1.2 to 10, more preferably from 1.3 to 8, and particularly preferably from 1.4 to 3.6. By micronizing the metal nanoparticles 20 into the mean particle size D_{C} from 0.7 nm to 5 nm, excellent catalytic activity can be obtained. A metal element (M) of the metal nanoparticles 20 is preferably contained in an amount from 0.5 to 2.5 mass% relative to the structured catalyst for ammonia synthesis 1, and more preferably from 0.5 to 1.5 mass% relative to the structured catalyst for ammonia synthesis 1. For example, when the metal element (M) is Co, a content (mass%) of a Co element is expressed as {(mass of Co element)/(mass of all elements of structured catalyst for ammonia synthesis 1)} × 100.

The metal nanoparticles 20 only need to be constituted by an unoxidized metal, and may be constituted by a single metal or a mixture of two or more types of metals, for example. Note that in the present specification, the "metal" constituting the metal nanoparticles 20 (as the raw material) means to include a single metal containing one type of metal element (M) and a metal alloy containing two or more types of metal elements (M), and is a generic term for a metal containing one or more types of metal elements.

The metal is not particularly limited as long as it has the catalytic ability as the ammonia synthesis catalyst. The examples include at least one type of metal selected from the group consisting of molybdenum (Mo), tungsten (W), rhenium (Re), iron (Fe), cobalt (Co), ruthenium (Ru), osmium (Os), chromium (Cr), manganese (Mn), technetium (Tc), and rhodium (Rh), or combinations of the various metals, such as Fe and Ru, Ru and Re, Fe and Mo, and the like. In particular, the metal is preferably at least one type selected from the group consisting of Fe, Co, Ru, Os, and Rh from a perspective of ammonia synthesis under a low temperature condition and a low pressure condition.

Furthermore, a ratio of silicon (Si) constituting the support 10 to the metal element (M) constituting the metal nanoparticles 20 (a ratio of number of atoms Si/M) is preferably from 10 to 1000, and more preferably from 50 to 200. With the ratio of greater than 1000, the activity is low, and possibly the action of the ammonia synthesis catalytic substance cannot be sufficiently obtained. On the other hand, with the ratio of less than 10, the ratio of the metal nanoparticles 20 is too high, and strength of the support 10 tends to decrease. Note that the metal nanoparticles 20 here mean nanoparticles held or supported inside of the support 10, not including metal nanoparticles adhered to the outer surface of the support 10.

### Function of Structured Catalyst for Ammonia Synthesis

The structured catalyst for ammonia synthesis 1 includes the support 10 having the porous structure and the at least one ammonia synthesis catalytic substance, which are metal nanoparticles 20, present inside the support 10 as described above. In the structured catalyst for ammonia synthesis 1, the metal nanoparticles 20 exhibit the catalytic ability through bringing the metal nanoparticles 20 present inside the support 10 into contact with a fluid. Specifically, the fluid in contact with an outer surface 10a of the structured catalyst for ammonia synthesis 1 flows into the support 10 through the pore 11a formed in the outer surface 10a, is guided into the channel 11, moves through the inside of the channel 11, and exits to the outside of the structured catalyst for ammonia synthesis 1 through the other pore 11a. In the pathway through which the fluid moves through the inside of the channel 11, the contact with the metal nanoparticles 20 present in the channel 11 generates a catalytic reaction according to the ammonia synthesis catalytic ability of the metal nanoparticles 20. In addition, the structured catalyst for ammonia synthesis 1 has molecular sieving capability due to the support 10 having the porous structure.

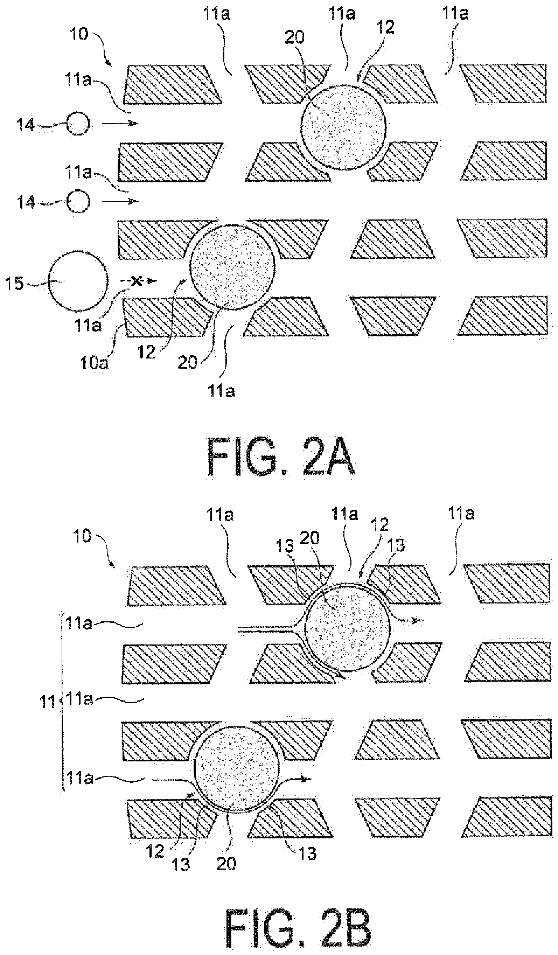

First, the following describes the molecular sieving capability of the structured catalyst for ammonia synthesis 1 with reference to FIG. 2A in which the fluid is a gas containing a starting material 14 (for example, nitrogen molecules, hydrogen molecules, or the like) that is a raw material for ammonia synthesis as an example. As illustrated in FIG. 2A, the starting material 14 having a size less than or equal to a pore diameter of the pore 11a, in other words, less than or equal to the inner diameter of the channel 11, can flow into the support 10. On the other hand, a non-starting material 15 having a size larger than the pore size of the pore 11a, which is not the raw material for ammonia synthesis, cannot flow into the support 10. In this way, when the fluid contains a plurality of types of compounds, the reaction of compounds that cannot enter into the support 10 can be restricted and a compound capable of entering into the support 10 can be reacted.

Among the compounds generated by the reaction in the support 10, only compounds composed of molecules having a size less than or equal to the pore diameter of the pore 11a can exit through the pore 11a to the exterior of the support 10, and are obtained as reaction products. On the other hand, a compound that cannot exit through the pore 11a to the exterior of the support 10 can be released to the exterior of the support 10 when converted into a compound composed of molecules having a size to be able to exit to the exterior of the support 10. In this way, a specified reaction product can be selectively obtained by using the structured catalyst for ammonia synthesis 1.

As illustrated in FIG. 2B, in the structured catalyst for ammonia synthesis 1, the metal nanoparticles 20, which are the ammonia synthesis catalytic substance, are embedded in the enlarged pore portion 12 of the channel 11. In a case where the mean particle size D_{C} of the metal nanoparticles 20 is greater than the mean inner diameter D_{F} of the channel 11 and smaller than the inner diameter D_{E} of the enlarged pore portion 12 (D_{F} < D_{C} < D_{E}), a small channel 13 is formed between the metal nanoparticles 20 and the enlarged pore portion 12. As indicated by the arrows in FIG. 2B, the fluid flowing into the small channel 13 comes into contact with the metal nanoparticles 20. Since each of the metal nanoparticles 20 are present in the enlarged pore portion 12, movement within the support 10 is restricted, and aggregation is prevented despite being micronized. Thus, the aggregation of the metal nanoparticles 20, 20 in the support 10 is prevented. As a result, a large contact area between the metal nanoparticles 20 and the fluid containing the starting material 14 flowing into the channel 11 can be stably maintained, and excellent catalytic activity can be obtained.

When the starting material 14 that has entered the channel 11 contacts the metal nanoparticles 20, ammonia is synthesized by oxidation decomposition reaction by the metal nanoparticles 20. The structured catalyst for ammonia synthesis 1 may be used to form an ammonia synthesis device. By using the structured catalyst for ammonia synthesis 1 according to the examples of the embodiment described above, it is possible to obtain the ammonia synthesis device that achieves the same effects as described above.

### Method for Producing Structured Catalyst for Ammonia Synthesis

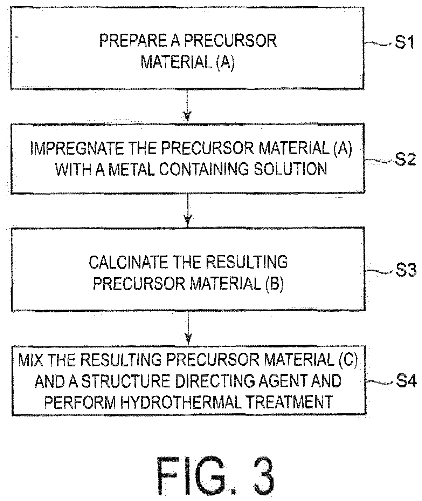

FIG. 3 is a flowchart depicting the method for producing the structured catalyst for ammonia synthesis 1 of FIG. 1. An example of the method for producing the structured catalyst for ammonia synthesis is described, in which the ammonia synthesis catalytic substance present inside the support is the metal nanoparticles.

### Step S1: Preparation Step

As illustrated in FIG. 3, first, the precursor material (A) for obtaining the support having the porous structure composed of the zeolite-type compound is prepared. The precursor material (A) is preferably a regular mesopore material, and can be appropriately selected according to the type (composition) of the zeolite-type compound constituting the support of the structured catalyst for ammonia synthesis.

Here, when the zeolite-type compound constituting the support of the structured catalyst for ammonia synthesis is a silicate compound, the regular mesopore material is preferably a compound including a Si-O skeleton in which fine pores having a pore diameter of 1 to 50 nm are uniformly sized and regularly developed one-dimensionally, two-dimension-ally, or three-dimensionally. While such a regular mesopore material is obtained as a variety of synthetic materials depending on the synthetic conditions. Specific examples of the synthetic material include SBA-1, SBA-15, SBA-16, KIT-6, FSM-16, and MCM-41. Among them, MCM-41 is preferred. Note that the pore diameter of SBA-1 is from 10 to 30 nm, the pore diameter of SBA-15 is from 6 to 10 nm, the pore diameter of SBA-16 is 6 nm, the pore diameter of KIT-6 is 9 nm, the pore diameter of FSM-16 is from 3 to 5 nm, and the pore diameter of MCM-41 is from 1 to 10 nm. Examples of such a regular mesopore material include mesoporous silica, mesoporous aluminosilicate, and mesoporous metallosilicate.

The precursor material (A) may be any of a commercially available product or a synthetic product. When the precursor material (A) is synthesized, it can be synthesized by a known method for synthesizing a regular mesopore material. For example, a mixed solution containing a raw material containing the constituent elements of the precursor material (A) and a molding agent for directing the structure of the precursor material (A) is prepared, and the pH is adjusted as necessary to perform hydrothermal treatment (hydrothermal synthesis). Thereafter, the precipitate (product) obtained by hydrothermal treatment is collected (e.g., filtered), washed and dried as necessary, and then calcinated to obtain the precursor material (A), which is a powdery regular mesopore material. Here, examples of the solvent for the mixed solution that can be used include water, an organic solvent such as alcohol, or a mixed solvent thereof. In addition, the raw material is selected according to the type of the support, and examples thereof include silica agents such as tetraethoxysilane (TEOS), fumed silica, and quartz sand. In addition, various types of surfactants, block copolymers, and the like can be used as the molding agent, and it is preferably selected depending on the type of the synthetic materials of the regular mesopore material. For example, a surfactant such as hexadecyltrimethylammonium bromide is preferable for producing MCM-41. For example, the hydrothermal treatment can be performed under treatment conditions of 0 to 2000 kPa at 80 to 800°C for 5 hours to 240 hours in a sealed container. For example, the calcination treatment can be performed in air under a treatment condition at 350 to 850°C for 2 to 30 hours.

### Step S2: Impregnating Step

The prepared precursor material (A) is then impregnated with a metal containing solution to obtain a precursor material (B).

The metal containing solution only needs to be a solution containing a metal component (for example, a metal ion) corresponding to the metal element (M) constituting the metal nanoparticles of the structured catalyst for ammonia synthesis, and can be prepared, for example, by dissolving a metal salt containing the metal element (M) in a solvent. Examples of such metal salts include metal salts such as chlorides, hydroxides, oxides, sulfates, and nitrates. Of these, nitrates are preferable. Examples of the solvent that can be used include water, an organic solvent such as alcohol, or a mixed solvent thereof.

The method for impregnating the precursor material (A) with the metal containing solution is not particularly limited; however, for example, the metal containing solution is preferably added to the precursor material (A) by small amount several times while mixing the powdery precursor material (A) before a calcination step described below. In addition, the surfactant is preferably added to the precursor material (A) as the additive before adding the metal containing solution to the precursor material (A) from the perspective of allowing the metal containing solution to enter the fine pores of the precursor material (A) more easily. It is believed that such additives serve to cover the outer surface of the precursor material (A) and inhibit the subsequently added metal containing solution from adhering to the outer surface of the precursor material (A), making it easier for the metal containing solution to enter the fine pores of the precursor material (A).

Examples of such additives include non-ionic surfactants, such as polyoxyethylene oleyl ether, polyoxyethylene alkyl ether, and polyoxyethylene alkylphenyl ether. It is believed that these surfactants do not adhere to the inside of the fine pores because their molecular sizes are large and cannot enter the fine pores of the precursor material (A), and will not interfere with the penetration of the metal containing solution into the fine pores. As the method for adding the non-ionic surfactant, for example, it is preferable to add 50 to 500 mass% of the non-ionic surfactant to the precursor material (A) prior to the calcination step described below. When the added amount of the non-ionic surfactant to the precursor material (A) is less than 50 mass%, the aforementioned suppressing action will not easily occur, and when more than 500 mass% of the non-ionic surfactant is added to the precursor material (A), the viscosity becomes too high, which is not preferable. Thus, the added amount of the non-ionic surfactant to the precursor material (A) is a value within the range described above.

Furthermore, the added amount of the metal containing solution added to the precursor material (A) is preferably adjusted as appropriate in consideration of the amount of the metal element (M) contained in the metal containing solution with which the precursor material (A) is impregnated (that is, the amount of the metal element (M) present in the precursor material (B)). For example, prior to the calcination step described below, the added amount of the metal containing solution added to the precursor material (A), in terms of the ratio of silicon (Si) constituting the precursor material (A) to the metal element (M) contained in the metal containing solution added to the precursor material (A) (the ratio of number of atoms Si/M), is preferably adjusted to from 10 to 1000, and more preferably from 50 to 200. For example, in a case where the surfactant is added to the precursor material (A) as the additive prior to adding the metal containing solution to the precursor material (A), when the added amount of the metal containing solution added to the precursor material (A), in terms of the ratio of number of atoms Si/M. is from 50 to 200, from 0.5 to 2.5 mass% of the metal element (M) of the metal nanoparticles can be contained in the structured catalyst. In the state of the precursor material (B), the amount of the metal element (M) present in the fine pores is generally proportional to the added amount of the metal containing solution added to the precursor material (A) when the metal concentration of the metal containing solution, the presence or absence of additives, and other various conditions, such as temperature and pressure, are the same. The amount of metal element (M) present in the precursor material (B) is also in a proportional relationship to the amount of metal element constituting the metal nanoparticles present inside the support of the structured catalyst for ammonia synthesis. Thus, by regulating the added amount of the metal containing solution added to the precursor material (A) to the range described above, the inside of the fine pores of the precursor material (A) can be sufficiently impregnated with the metal containing solution, and thus the amount of metal nanoparticles present inside the support of the structured catalyst for ammonia synthesis can be adjusted.

After impregnating the precursor material (A) with the metal containing solution, a washing treatment may be performed as necessary. The wash solution that can be used include water, an organic solvent such as alcohol, or a mixed solution thereof. Furthermore, after the precursor material (A) is impregnated with the metal containing solution, and subjected to the washing treatment as necessary, preferably, the precursor material (A) is further subjected to drying treatment. Drying treatments include overnight natural drying and high temperature drying at 150°C or lower. Note that when the calcination treatment described below is performed in the state in which there is a large amount of moisture contained in the metal containing solution and moisture of the wash solution remaining in the precursor material (A), the skeletal structure of the regular mesopore material of the precursor material (A) may be broken, and thus it is preferable to dry it sufficiently.

### Step S3: Calcination Step

Next, a precursor material (C) is obtained by calcinating the precursor material (B) obtained by impregnating the precursor material (A) for obtaining the support having the porous structure composed of the zeolite-type compound with the metal containing solution.

For example, the calcination treatment is preferably performed in air under a treatment condition at 350 to 850°C for 2 to 30 hours. The metal component that has impregnated the pores of the regular mesopore material undergoes crystal growth by such a calcination treatment, and metal nanoparticles are formed in the pores.

### Step S4: Hydrothermal Treatment Step

A mixed solution of the precursor material (C) and the structure directing agent is then prepared, and the precursor material (C) obtained by calcinating the precursor material (B) is hydrothermally treated to obtain a structured catalyst for ammonia synthesis.

The structure directing agent is a molding agent for directing the skeletal structure of the support of the structured catalyst for ammonia synthesis, and, for example, a surfactant can be used. The structure directing agent is preferably selected according to the skeletal structure of the support of the structured catalyst for ammonia synthesis, and, for example, a surfactant, such as tetramethylammonium bromide (TMABr), tetraethylammonium bromide (TEABr), and tetrapropylammonium bromide (TPABr) are suitable.

The mixing of the precursor material (C) and the structure directing agent may be performed during the hydrothermal treatment step or may be performed before the hydrothermal treatment step. Furthermore, the method for preparing the mixed solution is not particularly limited, and the precursor material (C), the structure directing agent, and the solvent may be mixed simultaneously, or the precursor material (C) and the structure directing agent may each be dispersed in the solvents and then these dispersions may be mixed. Examples of the solvent that can be used include water, an organic solvent such as alcohol, or a mixed solvent thereof. In addition, it is preferable that the pH of the mixed solution is adjusted using an acid or a base prior to the hydrothermal treatment.

The hydrothermal treatment can be performed by a known method. For example, the hydrothermal treatment is preferably performed under a treatment condition of 0 to 2000 kPa at 80 to 800°C for 5 hours to 240 hours in a sealed container. Furthermore, the hydrothermal treatment is preferably performed under a basic condition. Although the reaction mechanism here is not necessarily clear, by performing the hydrothermal treatment using the precursor material (C) as a raw material, the skeletal structure of the regular mesopore material of the precursor material (C) gradually collapses. However, under the action of the structure directing agent, a new skeletal structure (porous structure) as the support of the structured catalyst for ammonia synthesis is formed while substantially maintaining the position of the metal nanoparticles in the fine pores of the precursor material (C). The structured catalyst for ammonia synthesis obtained in this manner includes the support having the porous structure and the metal nanoparticles present inside the support, and further the support includes the channels in which the plurality of pores connect with one another by the porous structure, and at least a part of the metal nanoparticles are present in the channel of the support. Furthermore, in the present embodiment, in the hydrothermal treatment step, a mixed solution of the precursor material (C) and the structure directing agent is prepared, and the precursor material (C) is subjected to hydrothermal treatment, which is not a limitation. The precursor material (C) may be subjected to hydrothermal treatment without mixing the precursor material (C) and the structure directing agent.

The precipitate obtained after the hydrothermal treatment (structured catalyst for ammonia synthesis) is preferably washed, dried, and calcinated as necessary after colllected (e.g., filtered). Examples of the wash solution that can be used include water, an organic solvent such as alcohol, or a mixed solution thereof. Drying treatments include overnight natural drying and high temperature drying at 150°C or lower. Note that when calcination treatment is performed in the state in which there is a large amount of moisture remaining in the precipitate, the skeletal structure as the support of the structured catalyst for ammonia synthesis may be broken, and thus it is preferable to dry the precipitate sufficiently. Additionally, for example, the calcination treatment can be performed in air under a treatment condition at 350 to 850°C for 2 to 30 hours. With such calcination treatment, the structure directing agent that has been attached to the structured catalyst for ammonia synthesis is burned and removed. Furthermore, the structured catalyst for ammonia synthesis can be used as is without subjecting the collected precipitate to calcination treatment, depending on the intended use. For example, when the environment in which the structured catalyst for ammonia synthesis is used is a high temperature environment of an oxidizing atmosphere, exposure of the structured catalyst for ammonia synthesis to a usage environment for a period of time allows the structure directing agent to be burned and removed and to obtain a structured catalyst for ammonia synthesis similar to that when subjected to calcination treatment. Thus, the obtained structured catalyst for ammonia synthesis can be used as is.

The production method described above is an example in which the metal element (M) contained in the metal containing solution with which the precursor material (A) is impregnated is a hardly oxidized metal species (for example, noble metal).

When the metal element (M) contained in the metal containing solution with which the precursor material (A) is impregnated is an easily oxidized metal species (for example, Fe, Co, and Cu), a reduction treatment of the hydrothermally treated precursor material (C) is preferably performed after the hydrothermal treatment step. When the metal element (M) contained in the metal containing solution is an easily oxidized metal species, the metal component is oxidized due to heat treatment in steps (Steps S3 and S4) after the impregnating process (Step S2). Therefore, metal oxide nanoparticles are present inside the support formed in the hydrothermal treatment step (Step S4). Therefore, to obtain the structured catalyst for ammonia synthesis in which the metal nanoparticles are present inside the support, it is desirable to perform the calcination treatment on the collected precipitate after the hydrothermal treatment, and further to perform the reduction treatment under a reducing gas atmosphere such as hydrogen gas (Step S5: reduction treatment step). By performing the reduction treatment, the metal oxide nanoparticles present inside the support are reduced, and the metal nanoparticles corresponding to the metal element (M) constituting the metal oxide nanoparticles are formed. As a result, the structured catalyst for ammonia synthesis in which the metal nanoparticles are present inside the support is obtained. Note that such a reduction treatment only needs to be performed as necessary. For example, when an environment in which the structured catalyst for ammonia synthesis is used is a reducing atmosphere, the metal oxide nanoparticles are reduced by exposing the metal oxide nanoparticles to the usage environment for a period of time. Accordingly, a structured catalyst for ammonia synthesis similar to that when subjected to the reduction treatment can be obtained, thereby ensuring the use of the structured catalyst for ammonia synthesis in which oxide nanoparticles are present inside the support as it is.

### Modified Example of Structured Catalyst for Ammonia Synthesis 1

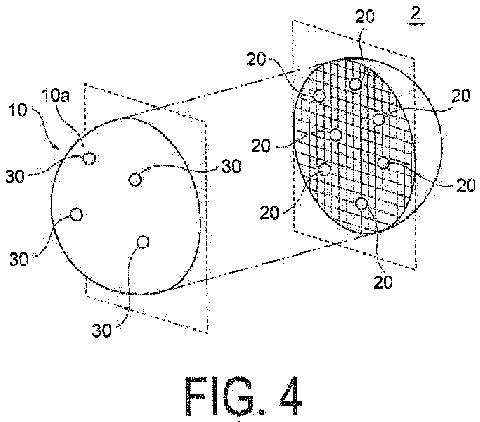

FIG. 4 is a schematic view illustrating the modified example of the structured catalyst for ammonia synthesis 1 of FIG. 1.

Although FIG. 1 illustrates the structured catalyst for ammonia synthesis 1 in the case where it includes the support 10 and the metal nanoparticles 20, which are the ammonia synthesis catalytic substance, present inside the support 10, the structured catalyst for ammonia synthesis 1 is not limited to this composition. For example, as illustrated in FIG. 4, a structured catalyst for ammonia synthesis 2 may further include other metal nanoparticles 30, which are other ammonia synthesis catalytic substances, held on the outer surface 10a of the support 10.

These other metal nanoparticles 30 are a material that exhibit one or more catalytic abilities. The catalytic abilities of the other metal nanoparticles 30 may be the same as or different from the catalytic activities of the metal nanoparticles 20. Also, in a case where both of the metal nanoparticles 20 and 30 are materials having the same catalytic abilities, the materials of the other metal nanoparticles 30 may be the same as or different from the materials of the metal nanoparticles 20. With this composition, a content of the catalytic substances held in the structured catalyst for ammonia synthesis 2 can be increased, and the catalytic activity of the catalytic substance can be further promoted.

In this case, the content of the metal nanoparticles 20 present inside the support 10 is preferably greater than the content of the other metal nanoparticles 30 held on the outer surface 10a of the support 10. Thus, the catalytic ability of the metal nanoparticles 20 held inside the support 10 becomes dominant, and the catalytic ability of the ammonia synthesis catalytic substance is stably exhibited.

In addition, the present invention provides a method for synthesizing ammonia that synthesizes ammonia from nitrogen and hydrogen using a catalyst. The catalyst includes the structured catalyst for ammonia synthesis 1 including: the support 10 having the porous structure composed of the zeolite-type compound and the at least one ammonia synthesis catalytic substance present inside the support 10. The support 10 includes the channels 11 connecting with one another. The ammonia synthesis catalytic substance is present in at least the enlarged pore portion 12 of the channel 11 in the support 10. That is, the present invention provides the method for synthesizing ammonia that synthesizes ammonia from nitrogen and hydrogen using the structured catalyst for ammonia synthesis described above. In particular, the mean particle size of the metal nanoparticles 20, which are the ammonia synthesis catalytic substance, is preferably from 0.7 nm to 5 nm, and the mean particle size of the channel 11 is preferably from 0.50 nm to 0.64 nm.

While a raw material used to perform the synthesis method of ammonia is not particularly limited as long as the raw material is a synthetic gas having molecular nitrogen and hydrogen as main components, the composition ratio is preferably N2:H2 = 1:3 in terms of molar ratio. Furthermore, the reaction conditions are preferably in the range from 250 to 600°C as the reaction temperature and in the range from 0.1 to 100 MPa (absolute pressure) as the pressure.

The synthesis of ammonia can be performed by a process known as an ammonia synthesis process, for example, fixed bed, supercritical fixed bed, slurry bed, and fluidized bed. Preferred processes can include the fixed bed, the supercritical fixed bed, and the slurry bed. Similarly to the typical Haber-Bosch method, a representative method for the synthesis of ammonia is in particular a method in which a mixed gas of nitrogen and hydrogen as raw materials is reacted directly under heating and pressurization, and the ammonia generated by the reaction of N₂ + 3H₂ → 2NH₃ is cooled or absorbed with water for separation.

In this way, by using the structured catalyst for ammonia synthesis according to an embodiment of the present invention for the method for synthesizing ammonia with nitrogen and hydrogen, the same effects as those exhibited by the structured catalyst for ammonia synthesis can be obtained also in the method for synthesizing ammonia described above.

Furthermore, in the present invention, a method for synthesizing ammonia in which nitrogen and hydrogen are converted to ammonia using the ammonia synthesis device described above may be provided. The ammonia synthesis device is not particularly limited as long as ammonia synthesis can be achieved using the structured catalyst for ammonia synthesis described above, and a commonly used reaction device, for example, a reactor, a reaction tube, a reaction column, or the like can be used. By using the ammonia synthesis device including the structured catalyst for ammonia synthesis, the same effects as those exhibited by the structured catalyst for ammonia synthesis can be obtained.

Hereinbefore, the structured catalyst for ammonia synthesis according to the present embodiments has been described, but the present invention is not limited to the above embodiments, and various modifications and changes are possible on the basis of the technical concept of the present invention.

### Examples

### Examples 1 to 144

### Synthesis of Precursor Material (A)

A mixed aqueous solution was prepared by mixing a silica agent (tetraethoxysilane (TEOS), available from Wako Pure Chemical Industries, Ltd.) and a surfactant as a molding agent. The pH was adjusted as appropriate, and hydrothermal treatment was performed at 80 to 350°C for 100 hours in a sealed container. Thereafter, the produced precipitate was filtered out, washed with water and ethanol, and then further calcinated in air at 600°C for 24 hours to obtain the precursor materials (A) of the types and having the pore diameters shown in Tables 1 to 8. Note that the following surfactants were used depending on the type of the precursor material (A) ("the type of the precursor material (A): surfactant").

• MCM-41: Hexadecyltrimethylammonium bromide (CTAB) (available from Wako Pure Chemical Industries, Ltd.)

### Production of Precursor Materials (B) and (C)

Next, a metal containing aqueous solution was prepared by dissolving a metal salt containing the metal element (M) in water according to the metal element (M) constituting metal nanoparticles of the types shown in Tables 1 to 8. Note that the following metal salts were used according to the types of metal nanoparticles ("metal nanoparticles: metal salt").
- Co: cobalt (II) nitrate hexahydrate (available from Wako Pure Chemical Industries, Ltd.)
- Fe: iron (III) nitrate nonahydrate (available from Wako Pure Chemical Industries, Ltd.)
- Ru: Ruthenium (III) chloride n-hydrate (available from Wako Pure Chemical Industries, Ltd.)
- Rh: Rhodium (III) nitrate n-hydrate (available from Wako Pure Chemical Industries, Ltd.)

Next, the metal containing aqueous solution was added to the powdery precursor material (A) by small amount in a plurality of times and dried at room temperature (20°C ± 10°C) for 12 hours or longer to obtain the precursor material (B).

Note that when the condition for the presence or absence of additives shown in Tables 1 to 8 is "yes," pretreatment in which an aqueous solution of polyoxyethylene (15) oleyl ether (NIKKOL BO-15 V, available from Nikko Chemicals Co., Ltd.) was added as the additive to the precursor material (A) prior to adding the metal containing aqueous solution was performed, and then the metal containing aqueous solution was added as described above. Note that when the condition for the presence or absence of additives is "none", the pretreatment with the additive as described above was not performed.

Furthermore, the added amount of the metal containing aqueous solution added to the precursor material (A) was adjusted so that the value obtained by conversion to the ratio of silicon (Si) constituting the precursor material (A) to the metal element (M) contained in the metal containing aqueous solution (a ratio of the number of atoms Si/M) was the values in Tables 1 to 8.

Next, the precursor material (B) impregnated with the metal containing aqueous solution obtained as described above was calcinated in air at 600°C for 24 hours to obtain the precursor material (C).

The precursor material (C) obtained as described above and the structure directing agent shown in Tables 1 to 8 were mixed to produce a mixed aqueous solution. Hydrothermal treatment was performed at 80 to 350°C in a sealed container under the conditions of pH and time shown in Tables 1 to 8. Thereafter, the produced precipitate was filtered out, washed with water, dried at 100°C for 12 hours or longer, and further calcinated in air at 600°C for 24 hours. The calcinated product was then collected and reduction treatment was performed under the inflow of hydrogen gas at 400°C for 350 minutes to obtain structured catalysts including the support and metal nanoparticles as catalytic substance shown in Tables 1 to 8 (Examples 1 to 144).

### Comparative Example 1

In Comparative Example 1, cobalt (II, III) oxide powder having a mean particle size of 50 nm or less (available from Sigma-Aldrich Japan LLC) was mixed with MFI type silicalite, and a hydrogen reduction treatment was performed similarly to the examples to obtain a structured catalyst where cobalt nanoparticles as a catalytic substance was attached to an outer surface of the silicalite as a support. The MFI type silicalite was synthesized in the similar method as in Examples 1 to 6 except for a step of adding a metal.

### Comparative Example 2

In Comparative Example 2, MFI type silicalite was synthesized in the similar method as in Comparative Example 1 except that the step of attaching the cobalt nanoparticles was omitted.

### Evaluation

Various characteristic evaluations were performed on the structured catalysts of Examples and the silicalites of Comparative Examples under the conditions described below.

### [A] Cross-sectional observation

Observation samples of the structured catalysts of Examples and the silicalites of Comparative Examples were produced by pulverization method, and the cross-sectional observation was performed using a transmission electron microscope (TEM) (TITAN G2, available from FEI). As a result, it was confirmed that, in the structured catalysts of the examples, the catalytic substance was present and held in the support made from silicalite or zeolite. On the other hand, in the silicalite of Comparative Example 1, the catalytic substance was only attached to the outer surface of the support and not present inside the support.

In addition, among the examples described above, the cross section of the structured catalyst using iron nanoparticles (Fe) as the metal was cut by focused ion beam (FIB) processing, and cross-sectional elemental analysis was performed using SEM (SU8020, available from Hitachi High-Technologies Corporation) and EDX (X-Max, available from Horiba, Ltd.). As a result, Fe element was detected inside the support. It was confirmed that iron nanoparticles were present inside the support from the results of the cross-sectional observation using the TEM and the SEM/EDX.

### [B] Mean Inner Diameter of Channel of Support and Mean Particle Size of Catalytic Substance

In a TEM image taken in the cross-sectional observation performed in the evaluation [A], 500 channels in the support were randomly selected, the respective major diameter and minor diameter were measured, the inner diameter was calculated from the mean values (N = 500), and further the mean value of the inner diameters was determined to be the mean inner diameter D_{F} of the channels in the support. In addition, for the catalytic substance, 500 parts of catalytic substance were randomly selected from the TEM image similarly, the respective particle sizes were measured (N = 500), and the mean value of the particle sizes was determined to be the mean particle size Dc of the catalytic substance. The results are shown in Tables 1 to 8.

Also, SAXS (small angle X-ray scattering) was used for analysis to confirm the mean particle size and a dispersion status of the catalytic substance. Measurements by SAXS were performed using a Spring-8 beam line BL19B2. The obtained SAXS data was fitted with a spherical model using the Guinier approximation, and the particle size was calculated. The particle sizes of the structured catalysts whose metals were iron nanoparticles were measured. Furthermore, as a comparative reference, commercially available iron nanoparticles (available from Wako) were observed and measured on SEM.

As a result, in the commercially available products, iron nanoparticles of various sizes in a range of particle sizes of approximately from 50 nm to 400 nm were randomly present, whereas in the measurement results of SAXS, scattering peaks with particle sizes of 10 nm or less were also detected in the structured catalysts of examples having a mean particle size of 1.2 nm to 2.0 nm obtained from the TEM image. From the measurement results of SAXS and the cross-sectional measurement results by SEM/EDX, it was found that catalytic substances having uniform particle sizes of 10 nm or less are present inside the support in a substantially high dispersed state.

### [C] Relationship between Added Amount of Metal Containing Solution and Amount of Metal Embedded in Support

A structured catalyst in which metal nanoparticles were embedded in the support at an added amount of the ratio of the number of atoms of Si/M = 50, 100, 200, or 1000 (M = Co, Ni, Ru, Rh) was produced, and then the amount of metal (mass%) that was embedded in the support of the structured catalyst produced at the added amount was measured. Note that in the present measurement, the structured catalyst having the ratio of number of atoms of Si/M = 100, 200, or 1000 was produced by adjusting the added amount of the metal containing solution in the same manner as the structured catalysts having the ratio of number of atoms of Si/M = 100, 200, or 1000 among Examples 1 to 384, and the structured catalyst with the ratio of number of atoms of Si/M = 50 was produced in the same manner as the structured catalysts having the ratio of number of atoms of Si/M = 100, 200, or 1000, except that the added amount of the metal containing solution was different.

The metal was quantified by ICP (radiofrequency inductively coupled plasma) alone or in combination with ICP and XRF (fluorescence X-ray analysis). XRF (energy dispersive fluorescent X-ray analyzer "SEA1200VX", available from SSI Nanotechnology) was performed under conditions of a vacuum atmosphere, an accelerating voltage of 15 kV (using a Cr filter), or an accelerating voltage of 50 kV (using a Pb filter). XRF is a method for calculating the amount of metal present in terms of fluorescence intensity, and XRF alone cannot calculate a quantitative value (in terms of mass%). Therefore, the amount of metal in the structured catalyst to which the metal was added at Si/M = 100 was quantitated by ICP analysis, and the amounts of metal in the structured catalysts in which the metal was added at Si/M = 50 and less than 100 were calculated based on XRF measurement results and ICP measurement results.

As a result, it was confirmed that the amount of metal embedded in the structured catalyst increases as the added amount of the metal containing solution increases, at least in a range that the ratio of number of atoms Si/M is from 50 to 1000.

### [D] Performance Evaluation

Catalytic ability of the catalytic substances were evaluated on the structured catalysts of the examples and the silicalites of the comparative examples. The results are shown in Tables 1 to 8.

### (1) Catalytic Activity

The catalytic activity was evaluated under the following conditions:

First, 0.2 g of the structured catalysts with uniform amounts of metal contained in the catalysts were charged in a normal pressure flow reactor, and mixed gases of nitrogen gas and hydrogen gas as raw materials were brought into contact with the structured catalysts to perform an ammonia synthesis reaction. The reaction temperature was 400°C, the reaction pressure was 1 Kg/cm², and the feed amount of the reaction raw material was 79000 mol/h for hydrogen, and 120000 mol/h for nitrogen. The obtained ammonia was analyzed by gas chromatography mass spectrometry (GC/MS) for the composition. Furthermore, the reaction performance was expressed as the number of moles of ammonia generated per 1 g of catalyst for 1 hr.

During the catalytic reaction, when the amount of generated ammonia gas was greater than or equal to 500 µmol/g•hr, the catalytic activity was determined to be particularly satisfactory, "A", when the amount was 300 µmol/g•hr or greater and less than 500 µmol/g•hr, the catalytic activity was determined to be satisfactory, "B", when the amount was 100 µmol/g•hr or greater and less than 300 µmol/g•hr, the catalytic activity was determined to be not satisfactory but was in a pass level, "C", and when the amount was less than 100 µmol/g•hr, the catalytic activity was determined to be poor, "D".

### (2) Durability (Life Time)

The durability was evaluated under the following conditions.

First, the structured catalyst used in the evaluation (1) above was recovered and heated at 650°C for 12 hours to produce a structured catalyst after heating. Next, an ammonia synthesis reaction was performed by the similar manner as in the evaluation (1) above using the obtained structured catalyst after heating, and further composition analysis of the generated gas and the generated liquid was performed in the similar manner as in the evaluation (1) above.

In the present embodiment, when the generated amount of the compound by the structured catalyst after heating (the generated amount obtained in this evaluation (2)) was maintained 80% or greater compared to the generated amount of the compound by the structured catalyst prior to heating (the generated amount obtained in the evaluation (1) above), it was determined that durability (heat resistance) was excellent, and considered as "A". When it was maintained 60% or greater and less than 80%, it was determined that durability (heat resistance) was satisfactory, and considered as "B". When it was maintained 40% or greater and less than 60%, it was determined that durability (heat resistance) was not satisfactory, but was in a pass level (acceptable), and considered as "C". When it was reduced below 40%, it was determined that durability (heat resistance) was poor (not pass), and considered as "D".

Performance evaluations similar to those of the evaluations (1) and (2) were also performed on Comparative Examples 1 and 2. Note that Comparative Example 2 is a support itself and does not contain a catalytic substance. Therefore, in the performance evaluation described above, only the support of Comparative Example 2 was charged in place of the structured catalyst. The results are shown in Table 8.

**[Table 1]**

| No. | Production Conditions of Structured Catalyst | | | | | | | Structured Catalyst | | | | | Performance Evaluation | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support | | Catalytic Substance | | D_{C}/D_{F} | Catalytic Activity | Durability |
| | | | | | | | | Zeolite-Type Compound | | Metal Nanoparticles | | | | |
| | Type | Pore Diameter | Presence or Absence of Additives | Conversion Ratio of Added Amount of Metal Containing Solution (Ratio of Number of Atoms) Si/M | Type of Structure Directing Agent | pH | Time | Framework | Mean Inner Diameter D_{F} of Channels | Type | Mean Particle Size D_{C} | | | |
| | | (nm) | | | | | (h) | | (nm) | | (nm) | | | |
| Example 1 | MCM-41 | 1.1 | Yes | 100 | TEABr | 11 | 72 | MTW | 0.61 | Co | 0.87 | 1.43 | A | B |
| Example 2 | | 1.6 | | | | | | | | | 1.31 | 2.14 | A | B |
| Example 3 | | 2.0 | | | | | | | | | 1.57 | 2.57 | A | B |
| Example 4 | | 2.2 | | | | | | | | | 1.74 | 2.86 | A | A |
| Example 5 | | 2.7 | | | | | | | | | 2.18 | 3.57 | A | A |
| Example 6 | | 5.4 | | | | | | | | | 4.36 | 7.14 | B | A |
| Example 7 | | 1.1 | None | 100 | | | | | | | 0.87 | 1.43 | A | B |
| Example 8 | | 1.6 | | | | | | | | | 1.31 | 2.14 | A | B |
| Example 9 | | 2.0 | | | | | | | | | 1.57 | 2.57 | A | B |
| Example 10 | | 2.2 | | | | | | | | | 1.74 | 2.86 | B | A |
| Example 11 | | 2.7 | | | | | | | | | 2.18 | 3.57 | B | A |
| Example 12 | | 5.4 | | | | | | | | | 4,36 | 7.14 | C | A |

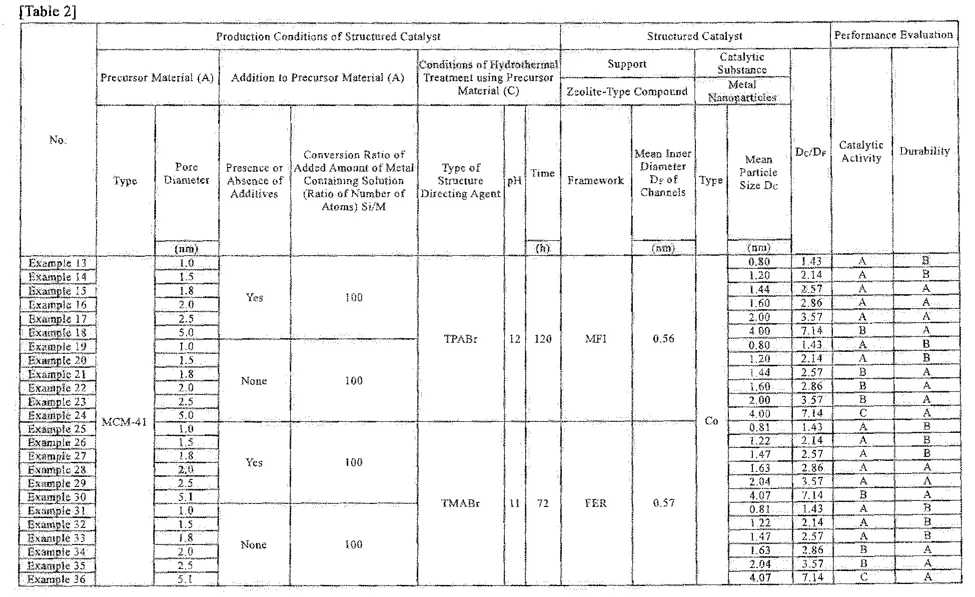

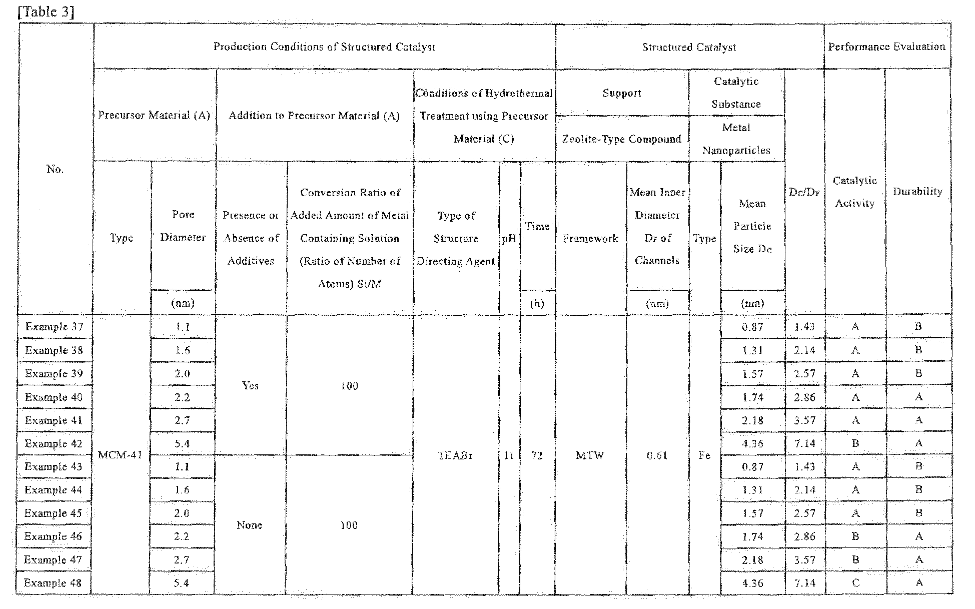

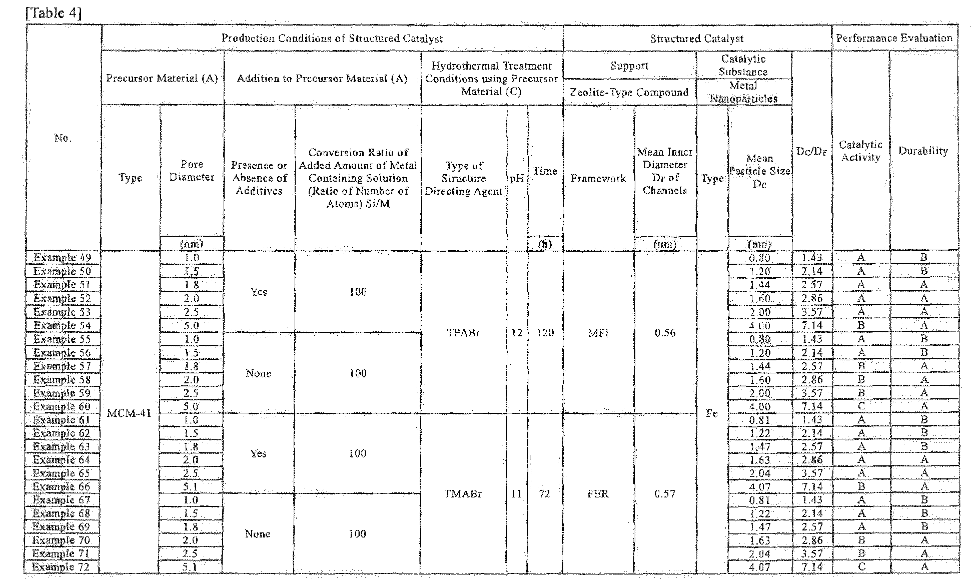

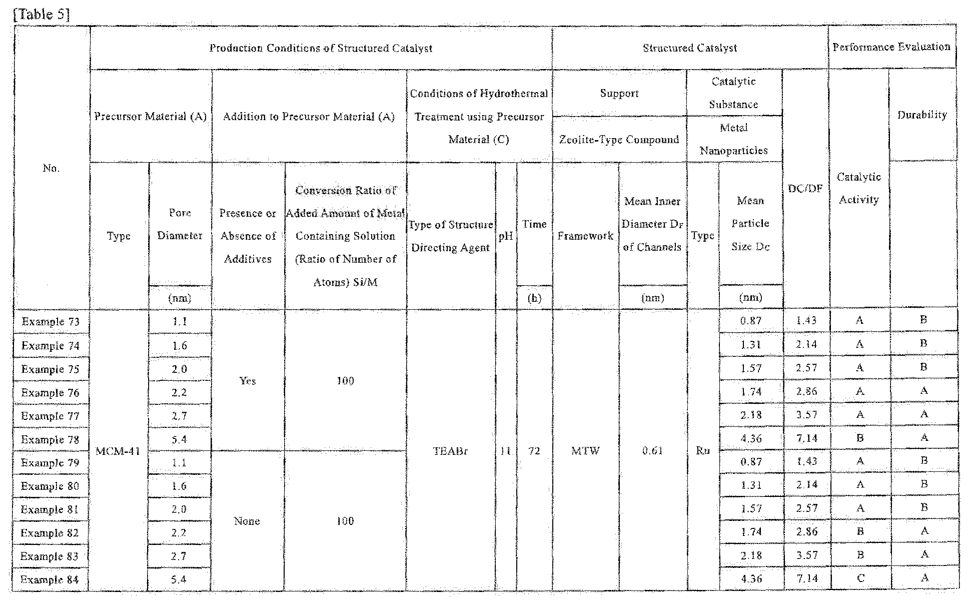

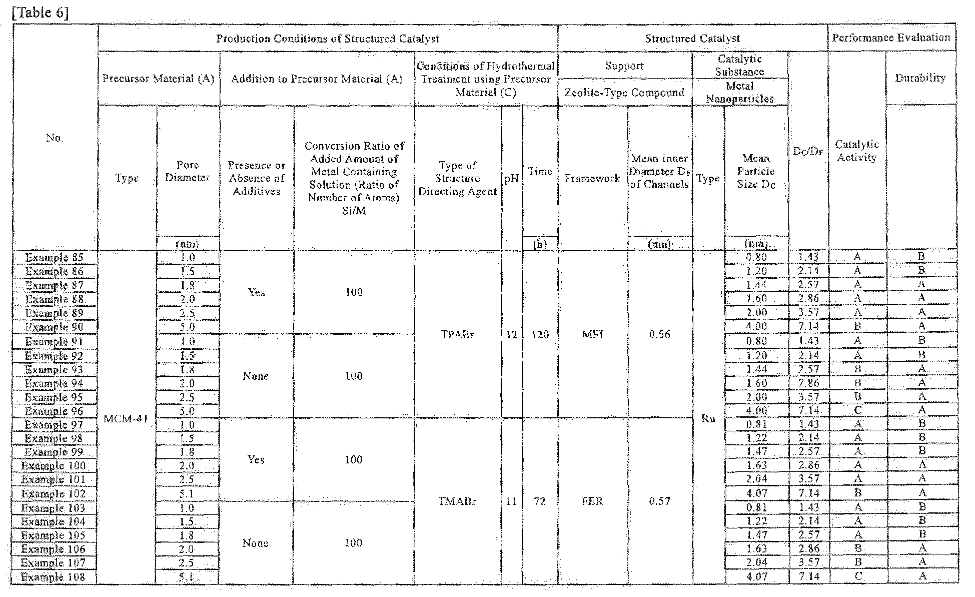

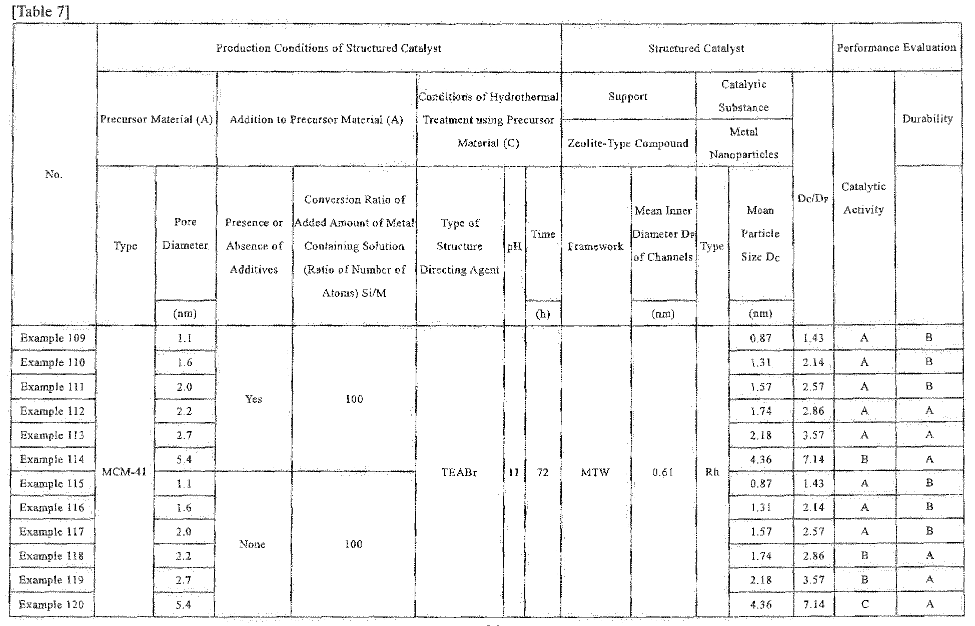

**[Table 8]**

| No. | Production Conditions of Structured Catalyst | | | | | | | Structured Catalyst | | | | | Performance Evaluation | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support | | Catalytic Su bstance | | D_{C}/D_{F} | Catalytic Activity | Durability |
| | | | | | | | | Zeolite-Type Compound | | Nano Metal particles | | | | |
| | Type | Pore Diameter | Presence or Absence of Additives | Conversion Ratio of Added Amount of Metal Containing Solution (Ratio of Number of Atoms) Si/M | Type of Structure Directing Agent | pH | Time | Framework | Mean Inner Diameter D_{F} of Channels | Type | Mean Particle Size D_{C} | | | |
| | | (nm) | | | | | (h) | | (nm) | | (nm) | | | |
| Example 121 | | 1.0 | Yes | 100 | TPABr | 12 | 120 | MFI | 0.56 | | 0.80 | 1.43 | A | B |
| Example 122 | | 1.5 | | | | | | | | | 1.20 | 2.14 | A | B |
| Example 123 | | 1.8 | | | | | | | | | 1.44 | 2.57 | A | A |
| Example 124 | | 2.0 | | | | | | | | | 1.60 | 2.86 | A | A |
| Example 125 | | 2.5 | | | | | | | | | 2.00 | 3.57 | A | A |
| Example 126 | | 5.0 | | | | | | | | | 4.00 | 7.14 | B | A |
| Example 127 | | 1.0 | None | 100 | | | | | | | 0.80 | 1.43 | A | B |
| Example 128 | | 1.5 | | | | | | | | | 1.20 | 2.14 | A | B |
| Example 129 | | 1.8 | | | | | | | | | 1.44 | 2.57 | B | A |
| Example 130 | | 2.0 | | | | | | | | | 1.60 | 2.86 | B | A |
| Example 131 | | 2.5 | | | | | | | | | 2.00 | 3.57 | B | A |
| Example 132 | | 5.0 | | | | | | | | | 4.00 | 7.14 | C | A |
| Example 133 | MCM-41 | 1.0 | Yes | 100 | TMABr | 11 | 72 | FER | 0.57 | Rh | 0.81 | 1.43 | A | B |
| Example 134 | | 1.5 | | | | | | | | | 1.22 | 2.14 | A | B |
| Example 135 | | 1.8 | | | | | | | | | 1.47 | 2.57 | A | B |
| Example 136 | | 2.0 | | | | | | | | | 1.63 | 2.86 | A | A |
| Example 137 | | 2.5 | | | | | | | | | 2.04 | 3.57 | A | A |
| Example 138 | | 5.1 | | | | | | | | | 4.07 | 7.14 | B | A |
| Example 139 | | 1.0 | None | 100 | | | | | | | 0.81 | 1.43 | A | B |
| Example 140 | | 1.5 | | | | | | | | | 1.22 | 2.14 | A | B |
| Example 141 | | 1.8 | | | | | | | | | 1.47 | 2.57 | A | B |
| Example 142 | | 2.0 | | | | | | | | | 1.63 | 2.86 | B | A |
| Example 143 | | 2.5 | | | | | | | | | 2.04 | 3.57 | B | A |
| Example 144 | | 5.1 | | | | | | | | | 4.07 | 7.14 | C | A |
| Comparative Example 1 | - | | | | | | | MFI Type Silicalite | 0.56 | Co | ≤ 50 | ≤ 67.6 | C | D |
| Comparative Example 2 | - | | | | | | | MFI Type Silicalite | 0.56 | - | - | | D | D |

As can be seen from Tables 1 to 8, the structured catalyst (Examples 1 to 144), which was confirmed by cross-sectional observation to hold the catalytic substance inside the support, was found to exhibit excellent catalytic activity in the ammonia synthesis reaction and excellent durability as the catalyst compared to the structured catalyst in which the catalytic substance was attached to the outer surface of the support only (Comparative Example 1) and the support itself without any catalytic substance (Comparative Example 2).

On the other hand, in the structured catalyst of Comparative Example 1 in which the catalytic substance was attached to the outer surface of the support only, the catalytic activity in the ammonia synthesis reaction was improved compared to the support itself of Comparative Example 2, which did not contain any catalytic substance; however, the structured catalyst exhibited inferior durability as the catalyst compared to the structured catalysts of Examples 1 to 144.

From the above results, it can be inferred that the structured catalyst for ammonia synthesis according to an embodiment of the present invention exhibits excellent catalytic activity in ammonia synthesis and has excellent durability as a catalyst.

### Other Embodiments

A method for using a structured catalyst for ammonia synthesis that includes a support and at least one ammonia synthesis substance. The support has a porous structure composed of a zeolite-type compound. The at least one ammonia synthesis substance is present inside the support. The support includes channels connecting with one another. The ammonia synthesis substance is present in at least an enlarged pore portion of the channel of the support.

### Reference Signs List

1 Structured catalyst for ammonia synthesis
10 Support
10a Outer surface
11 Channel
11a Pore
12 Enlarged pore portion
20 Metal nanoparticles
30 Metal nanoparticles
D_{C} Mean particle size
D_{F} Mean inner diameter
D_{E} Inner diameter

## Claims

1. A structured catalyst for ammonia synthesis comprising:
a support having a porous structure composed of a zeolite-type compound; and
an ammonia synthesis catalytic substance composed of at least one metal present inside the support, the ammonia synthesis catalytic substance having a mean particle size of 0.7 nm to 5 nm,
the support comprising channels connecting with one another, the channel having a mean inner diameter of 0.50 nm to 0.64 nm, and
the ammonia synthesis catalytic substance being present in at least the channel of the support.

2. The structured catalyst for ammonia synthesis according to claim 1, wherein
the channel has any of a one-dimensional pore, a two-dimensional pore, and a three-dimensional pore; and an enlarged pore portion, the one-dimensional pore, the two-dimensional pore, and the three-dimensional pore being defined by a framework of the zeolite-type compound, the enlarged pore portion having a different diameter from those of the one-dimensional pore, the two-dimensional pore, and the three-dimensional pore, and
the ammonia synthesis catalytic substance is present in at least the enlarged pore portion.

3. The structured catalyst for ammonia synthesis according to claim 2, wherein
the enlarged pore portion causes a plurality of pores constituting any of the one-dimensional pore, the two-dimensional pore, and the three-dimensional pore to connect with one another.

4. The structured catalyst for ammonia synthesis according to claim 2 or 3, wherein
the ammonia synthesis catalytic substance is metal nanoparticles.

5. The structured catalyst for ammonia synthesis according to claim 4, wherein
the metal nanoparticles are at least one type of metal selected from the group consisting of Mo, W, Re, Fe, Co, Ru, Os, Cr, Mn, Tc, and Rh.

6. The structured catalyst for ammonia synthesis according to claim 4 or 5, wherein
the metal nanoparticles contain a metal element (M) in an amount from 0.5 to 2.5 mass% relative to the structured catalyst for ammonia synthesis.

7. The structured catalyst for ammonia synthesis according to any one of claims 4 to 6, wherein
the metal nanoparticles have a mean particle size less than or equal to an inner diameter of the enlarged pore portion.

8. The structured catalyst for ammonia synthesis according to any one of claims 4 to 7, wherein
a ratio of the mean particle size of the metal nanoparticles to a mean inner diameter of the channel is from 1.2 to 10.

9. The structured catalyst for ammonia synthesis according to claim 8, wherein
the ratio of the mean particle size of the metal nanoparticles to the mean inner diameter of the channel is from 1.3 to 8.

10. The structured catalyst for ammonia synthesis according to claim 9, wherein
the ratio of the mean particle size of the metal nanoparticles to the mean inner diameter of the channel is from 1.4 to 3.6.

11. The structured catalyst for ammonia synthesis according to any one of claims 2 to 10, wherein
the enlarged pore portion has an inner diameter from 0.7 nm to 50 nm.

12. The structured catalyst for ammonia synthesis according to any one of claims 1 to 11, further comprising
at least one another ammonia synthesis catalytic substance held on an outer surface of the support.

13. The structured catalyst for ammonia synthesis according to claim 12, wherein
a content of the at least one ammonia synthesis catalytic substance present inside the support is greater than a content of the at least one another ammonia synthesis catalytic substance held on the outer surface of the support.

14. The structured catalyst for ammonia synthesis according to any one of claims 1 to 13, wherein
the zeolite-type compound is a silicate compound.

15. An ammonia synthesis device comprising the structured catalyst for ammonia synthesis described in any one of claims 1 to 14.

16. A method for producing a structured catalyst for ammonia synthesis comprising:
a calcination step of calcinating a precursor material (B), the precursor material (B) being obtained by impregnating a precursor material (A) for obtaining a support having a porous structure composed of a zeolite-type compound with a metal containing solution;
a hydrothermal treatment step of performing a hydrothermal treatment on a precursor material (C) obtained by calcinating the precursor material (B); and
a step of performing a reduction treatment on the hydrothermally treated precursor material (C).

17. The method for producing a structured catalyst for ammonia synthesis according to claim 16, wherein
prior to the calcination step, from 50 to 500 mass% of a non-ionic surfactant is added to the precursor material (A).

18. The method for producing a structured catalyst for ammonia synthesis according to claim 16 or 17, wherein
prior to the calcination step, the metal containing solution is dividedly added to the precursor material (A) in multiple times to impregnate the precursor material (A) with the metal containing solution.

19. The method for producing a structured catalyst for ammonia synthesis according to any one of claims 16 to 18, wherein
when the precursor material (A) is impregnated with the metal containing solution prior to the calcination step, an added amount of the metal containing solution added to the precursor material (A), in terms of a ratio of silicon (Si) constituting the precursor material (A) to a metal element (M) contained in the metal containing solution added to the precursor material (A), a ratio of number of atoms Si/M, is adjusted to from 10 to 1000.

20. The method for producing a structured catalyst for ammonia synthesis according to claim 16, wherein
in the hydrothermal treatment step, the precursor material (C) and a structure directing agent are mixed.

21. The method for producing a structured catalyst for ammonia synthesis according to claim 16, wherein
the hydrothermal treatment step is performed under a basic condition.

22. A method for synthesizing ammonia that synthesizes ammonia from nitrogen and hydrogen using a catalyst, the catalyst comprising a structured catalyst for ammonia synthesis comprising:
a support having a porous structure composed of a zeolite-type compound; and
at least one ammonia synthesis catalytic substance present inside the support,
the support comprising channels connecting with one another, and
the ammonia synthesis catalytic substance being present in at least an enlarged pore portion of the channel of the support.

23. A method for synthesizing ammonia comprising
synthesizing ammonia from nitrogen and water using the structured catalyst for ammonia synthesis described in any one of claims 1 to 14.

24. A method for synthesizing ammonia comprising
converting nitrogen and hydrogen into ammonia using the ammonia synthesis device described in claim 15.
